# EUROPÄISCHE PATENTSCHRIFT

(11) **EP 2 276 711 B1**
(45) Veröffentlichungstag und Bekanntmachung des Hinweises auf die Patenterteilung: **10.09.2014**
(21) Anmeldenummer: 09737826.9
(22) Anmeldetag: 17.04.2009
(51) Int. Cl.: C04B 35/109, C04B 35/119, C04B 35/484, C04B 35/488

(54) **VERFAHREN ZUR HERSTELLUNG VON KERAMISCHEN OBJEKTEN MITTELS SELEKTIVEN LASERSCHMELZENS**
PROCESS FOR PRODUCING CERAMIC OBJECTS BY MEANS OF SELECTIVE LASER MELTING
PROCÉDÉ DE FABRICATION D'OBJETS CÉRAMIQUES PAR FUSION LASER SÉLECTIVE

(30) Priorität: 30.04.2008 DE 102008021507
(43) Veröffentlichungstag der Anmeldung: 26.01.2011
(73) Patentinhaber: Fraunhofer-Gesellschaft zur Förderung der angewandten Forschung e.V., 80686 München (DE)
(72) Erfinder: WILKES, Jan, 52070 Aachen (DE); WISSENBACH, Konrad, 52134 Herzogenrath (DE)
(74) Vertreter: Finke, Hansjörg
(86) Internationale Anmeldenummer: PCT/EP2009/002839
(87) Internationale Veröffentlichungsnummer: WO 2009/132782

(56) Entgegenhaltungen:
- EP-A- 0 129 188
- EP-A- 1 772 210
- WO-A-02/40744
- WO-A-2004/089851
- DE-A1-102005 048 314
- SHISHKOVSKY ET AL: "Alumina-zirconium ceramics synthesis by selective laser sintering/melting" APPLIED SURFACE SCIENCE, ELSEVIER, AMSTERDAM, NL, Bd. 254, Nr. 4, 23. November 2007 (2007-11-23), Seiten 966-970, XP022360027 ISSN: 0169-4332
- MERINO ET AL: "Ionic conductivity in directionally solidified Al2O3-ZrO2(3% mol Y2O3) near eutectic composites" SOLID STATE IONICS, NORTH HOLLAND PUB. COMPANY. AMSTERDAM, NL, Bd. 178, Nr. 3-4, 6. März 2007 (2007-03-06), Seiten 239-247, XP005916294 ISSN: 0167-2738
- WANG A H ET AL: "Microstructural characteristics of Al2O3-based refractory containing ZrO2 induced by CO2 laser melting" APPLIED SURFACE SCIENCE ELSEVIER NETHERLANDS, Bd. 221, Nr. 1-4, 15. Januar 2004 (2004-01-15), Seiten 293-301, XP002536293 ISSN: 0169-4332
- BOURBAN ET AL: "Solidification microstructure of laser remelted Al2O3?ZrO2 eutectic" ACTA MATERIALIA, ELSEVIER, OXFORD, GB, Bd. 45, Nr. 12, 1. Dezember 1997 (1997-12-01), Seiten 5069-5075, XP005081406 ISSN: 1359-6454
- LARREA A ET AL: "ZrO2-Al2O3 eutectic plates produced by laser zone melting" JOURNAL OF THE EUROPEAN CERAMIC SOCIETY, ELSEVIER SCIENCE PUBLISHERS, BARKING, ESSEX, GB, Bd. 22, Nr. 2, 1. Februar 2002 (2002-02-01), Seiten 191-198, XP004328483 ISSN: 0955-2219
- VERA G. KHORUZHAYA ET AL: 'Physicochemical Investigation of the Reaction of Components of the Si-Al-O-N-Ti System in the Si3N4-Al2O3-AlN -SiO2-TiN-TiO2 Region. Part 2. Subsystems Si3N4-AlN, TiN-AlN, Al2O3-AlN' POWDER METALLURGY AND METAL CERAMICS Bd. 41, Nr. 5/6, 01 Januar 2002, Seiten 278 - 283, XP055022497 DOI: 10.1023/A:1020583415806 ISSN: 1068-1302

## Beschreibung

### Technisches Anwendungsgebiet

Die Erfindung betrifft ein Verfahren zum Herstellen eines Formkörpers aus Keramik durch schichtweises Aufbauen aus pulverförmigem Werkstoff, bei dem mehrere Pulverschichten übereinander aufgebracht werden und jede Pulverschicht in einem vorgegebenen, einem Querschnittsbereich des herzustellenden Formkörpers entsprechenden Bereich vor dem Aufbringen der nächstfolgenden Pulverschicht mittels Laserstrahlung über die gesamte Schichtdicke vollständig aufgeschmolzen wird, wobei der Werkstoff mindestens zwei keramische Stoffe enthält, die ein eutektisches System bilden. Bevorzugte Anwendungsgebiete sind solche, bei denen stabile und sehr präzise hergestellte Formteile aus Keramik benötigt werden, wie insbesondere bei der generativen Herstellung von keramischen Gerüsten für vollkeramischen Zahnersatz. Weitere Anwendungsgebiete sind die Herstellung von Prototypen oder die Fertigung von sehr komplexen Bauteilgeometrien, die mit subtraktiven Verfahren nicht oder nur sehr aufwendig herstellbar sind.

### Stand der Technik

Additive Fertigungsverfahren sind für metallische Materialien bereits kommerziell verfügbar, etwa das direkte Laserschmelzverfahren (SLM, "Selective Laser Melting"), welches z.B. aus der EP 0 946 325 B1 bekannt ist. Entsprechende Rapid-Manufacturing-Verfahren für keramische Materialien, mit denen vollständig dichte Formkörper aus Keramik direkt, d.h. ohne eine Nachbehandlung durch Sintern oder Infiltration hergestellt werden können, existieren dagegen bislang nicht bzw. sind noch Gegenstand der Forschung.

Bei Coulon et al.: "Results on laser sintering system for direct manufacturing of metallic or ceramic components", Proc. of the 23rd International Congress on Applications of Lasers and Electro-Optics 2004, wird ein selektives Lasersinterverfahren beschrieben, bei dem ein poröser Formkörper aus Keramik hergestellt wird. Eine vollständige Dichte kann auch durch eine nachfolgende Ofennachbehandlung nicht erreicht werden.

Andere Verfahren verwenden ein Pulver, das neben der Keramik eine niedrigschmelzende Binderphase enthält (z.B. einen Kunststoff). Nach der Herstellung des Formkörpers, in der lediglich der Binderanteil geschmolzen wird, muss der Binder noch ausgebrannt und der Grünling versintert werden. Dies ist mit Schrumpfung verbunden, so dass die Genauigkeit derartiger Verfahren begrenzt ist.

Ein Rapid-Manufacturing-Verfahren für keramische Materialien wird bei Wilkes et al.: "Rapid manufacturing of ceramic components by selective laser melting", Proc. of the Fourth International WLT-Conference on Lasers in Manufacturing", 2007, angegeben. In dieser Veröffentlichung wird ein direktes Laserschmelzverfahren beschrieben, bei dem ein rein keramisches Pulver direkt und vollständig geschmolzen wird. Das Pulver besteht aus einem oxidkeramischen Stoff, z.B. ZrO₂ oder aber Al₂O₃, mit einem kleinen Zusatz anderer oxidkeramischer Materialien. Auf diese Weise können zwar Formkörper sehr hoher Dichte von annähernd 100% hergestellt werden. Jedoch treten bei der Bearbeitung hohe Zugspannungen im Keramikmaterial auf. Dadurch kommt es während der Herstellung des Formkörpers zu starker Rissbildung in der Keramik, wodurch die Festigkeit derartig hergestellter Formkörper für die meisten Anwendungen unzureichend ist.

In Nieh, T.G. et al.: "Superplasticity in metals and ceramics", Cambridge University Press, Cambridge, UK, 1997, wird bei einer Mischung aus Al₂O₃ und ZrO₂ eine Superplastizität nachgewiesen.

Ein Verfahren gemäß dem Oberbegriff des Anspruchs 1 ist aus Shishkovsky et al.: "Alumina-zirconium ceramics synthesis by selective laser sintering/melting", Applied Surface Science, Elsevier, Amsterdam, NL, Bd. 254, Nr. 4, 23. November 2007, Seiten 966 bis 970, bekannt.

Schließlich sei noch auf die WO 02/40744 verwiesen, die ein Verfahren zum Laserauftragschweißen offenbart, bei dem keramisches Pulver, wie beispielsweise Al₂O₃ und AlN, mittels Laserstrahlung in der Luft geschmolzen und dann in geschmolzenem Zustand auf einem Substrat abgeschieden wird. Durch Variieren der Laserleistung während des Prozesses wird erreicht, dass der auf diese Weise hergestellte Formkörper eine Dichte von über 90 % aufweist. Es ist außerdem angegeben, dass das Substrat, das aus Metall, einer Metalllegierung und/oder Keramik bestehen kann, vorgeheizt werden kann, um Rissbildung im Substrat zu vermeiden.

Der Erfindung liegt die Aufgabe zugrunde, ein verbessertes Verfahren zum Herstellen eines Formkörpers aus Keramik anzugeben, mit dem rein keramische Formkörper mit annähernd zu 100% dichtem Gefüge hergestellt werden können, wobei eine Rissbildung weitgehend oder ganz vermieden wird, so dass die Formkörper eine hohe Festigkeit bzw. Biege- und Bruchfestigkeit aufweisen. Der Erfindung liegt darüber hinaus die Aufgabe zugrunde, entsprechende Formkörper bereitzustellen.

### Darstellung der Erfindung

Die Lösung dieses technischen Problems erfolgt durch ein Verfahren gemäß Anspruch 1 und einen Formkörper gemäß Anspruch 14. Vorteilhafte Ausgestaltungen und Weiterbildungen werden durch die abhängigen Ansprüche angegeben oder lassen sich aus der nachfolgenden Beschreibung und den Ausführungsbeispielen entnehmen.

Erfindungsgemäß wurde erkannt, dass sich das technische Problem durch ein Verfahren lösen lässt, bei dem der Formkörper durch schichtweises Aufbauen aus pulverförmigen Werkstoff hergestellt wird, wobei jede Pulverschicht in einem vorgegebenen, einem Querschnittsbereich des herzustellenden Formkörpers entsprechenden Bereich vor dem Aufbringen der nächstfolgenden Pulverschicht mittels Laserstrahlung über die gesamte Schichtdicke vollständig aufgeschmolzen wird, und wobei der Werkstoff mindestens zwei keramische Stoffe enthält, die ein eutektisches System bilden, und das außerdem die im Kennzeichen des Anspruchs 1 aufgeführten Merkmale enthält.

Dadurch wird das Auftreten von feinen Rissen im Formkörper noch weiter eingeschränkt bzw. ganz vermieden und die mechanische Festigkeit des Formkörpers weiter gesteigert. Außerdem kann auf eine Wärmenachbehandlung verzichtet werden, da das Material bereits direkt nach dem Aufbauprozess vollständig kristallin ist.

Da der verwendete pulverförmige Werkstoff mindestens zwei keramische Stoffe enthält, die ein eutektisches System bilden, enthält er mindestens zwei Komponenten, die im festen Zustand keine, oder wenigstens keine nennenswerte, gegenseitige Löslichkeit zeigen und keine Verbindung miteinander eingehen. Das Phasendiagramm des eutektischen Systems, d.h. der Mischung aus den mindestens zwei keramischen Stoffen weist einen eutektischen Punkt auf.

Durch die Wahl eines derartigen Werkstoffs lässt sich erreichen, dass sich bei der Kristallisation sehr feine Kristallite (Körner) in der Größenordnung von 1 µm und darunter ausbilden (die Größe der Kristallite lässt sich insbesondere mittels Rasterelektronenmikroskopie anhand eines Querschliffs durch eine hergestellte Probe ermitteln; dabei können die vorhandenen Phasen und die Größe der Ausscheidungen bzw. Kristallite durch den Helligkeitsunterschied zwischen den Phasen identifiziert werden). Die Kristallite sind erheblich kleiner als bei Verwendung eines reinen Stoffes. Ein ungehemmtes Kristallwachstum kann vermieden werden. Insgesamt kann ein Formkörper mit einem sehr homogenen, feinkörnigen und nahezu 100% dichten Gefüge hergestellt werden.

Darüber hinaus liegt aufgrund der Wahl eines derartigen Werkstoffs eine vergleichsweise niedrige Schmelz- und Erstarrungstemperatur vor. Dadurch wird die Gefahr, dass es aufgrund von Temperaturgradienten und daraus resultierenden hohen Zugspannungen innerhalb des Formköpers bei der Herstellung zu einer Rissbildung kommt, erheblich gesenkt.

Damit die genannten Wirkungen in hinreichendem Maße eintreten, müssen die zwei ein eutektisches System bildenden keramischen Stoffe jeweils in einem ausreichenden Anteil im pulverförmigen Werkstoff vorhanden sein. Vorzugsweise beträgt dieser relative Anteil mindestens 5 Gewichtsprozent, besonders vorgezogen ist jedoch ein relativer Anteil von mindestens 10 Gewichtsprozent.

Der pulverförmige Werkstoff besteht vorzugsweise aus relativ groben Pulverpartikeln, nämlich vorzugsweise Pulverpartikeln mit einem mittleren Primärpartikeldurchmesser von 10 µm bis 100 µm, typischerweise von ca. 30µm. (gemessen insbesondere mittels lichtmikroskopischer oder rasterelektronenmikroskopischer Aufnahmen). Auch hierdurch wird die Erzeugung eines besonders homogenen, feinkörnigen und dichten Gefüges sichergestellt. Gleichzeitig ist ein derartiger Werkstoff vergleichsweise kostengünstig herstellbar und einfach zu handhaben und zu verarbeiten.

Wesentlich ist, dass das Aufschmelzen einer Pulverschicht (in einem vorgegebenen, einem Querschnittsbereich des herzustellenden Formkörpers entsprechenden Bereich vor dem Aufbringen der nächstfolgenden Pulverschicht) über deren gesamte Schichtdicke vollständig erfolgt. Das bedeutet einerseits, dass die Pulverschicht in ihrer gesamten vertikalen Ausdehnung vollständig erfasst wird; andererseits bedeutet dies insbesondere auch, dass beide der mindestens zwei, vorzugsweise alle, Komponenten des Werkstoffpulvers vollständig geschmolzen werden. Erst dieses vollständige Aufschmelzen ermöglicht es, einen besonders (nämlich nahezu 100%) dichten Formkörper mit einem feinem Gefüge aus Kristalliten in der Größenordnung von 1µm und darunter herzustellen unter Verwendung relativ grober Pulverpartikel von typischerweise 30µm.

Auf ein Bindemittel kann bei dem Verfahren gemäß Anspruch 1 verzichtet werden. Vorzugsweise ist der Werkstoff somit bindemittelfrei. Dadurch entfallen Nachbearbeitungsschritte (Ausbrennen des Binderanteils, Versintern des Grünlings), wodurch der Aufwand des Verfahrens reduziert und die Genauigkeit des herzustellenden Formteils erhöht werden kann.

Als Laserstrahlquelle kann sowohl ein CO₂-Laser als auch ein Nd:YAG Laser, ein Faserlaser oder ein Diodenlaser verwendet werden. Die Laserleistung (am aufzubauenden Formkörper) liegt zwischen 10 W und etwa 200 W bei einem Fokusdurchmesser zwischen 50 µm und 300 µm. Die Scangeschwindigkeit liegt zwischen 10 mm/s und 600 mm/s.

Formkörper besonders hoher Festigkeit lassen sich mit einem Werkstoffgemisch aus Zirkonoxid (ZrO₂) und Aluminiumoxid (Al₂O₃) erreichen. Dieses Gemisch weist bei hohen Temperaturen eine plastische Verformbarkeit auf. Durch die plastische Verformbarkeit können während des Aufbauprozesses auftretende mechanische Spannungen abgebaut werden. Die Gefahr einer Rissbildung ist bei dieser Wahl des Werkstoffgemisches somit erheblich gesenkt.

Dem Werkstoffpulver kann auch ein Anteil Magnesiumoxid (MgO) beigemischt werden, vorzugsweise beträgt dieser Anteil mindestens 5 Gewichtsprozent, besonders vorgezogen sind mindestens 10 Gewichtsprozent. Durch diese Maßnahme kann eine Stabilisierung der tetragonalen Modifikation (insbesondere derjenigen von ZrO₂) erzielt und darüber hinaus eine Verbesserung der plastischen Verformbarkeit bei hohen Temperaturen erreicht werden.

Besondere Vorteile hat es im Übrigen, wenn neben den erfindungsgemäß vorhandenen zwei keramischen Phasen eine weitere, davon verschiedene keramische Phase beigemischt ist, die bei der Kristallisation aus der Schmelze nur eine unwesentliche oder - besonders bevorzugt - keine Volumenabnahme oder aber im optimalen Fall sogar eine Volumenzunahme zeigt. Dadurch kann der Bildung von Erstarrungsrissen beim Laserschmelzprozess noch stärker entgegengewirkt werden.

Der Formkörper wird schichtweise aufgebaut. Die erste Pulverschicht wird an ein auf einer Bauplattform befindliches Substrat aufgetragen und in einem vorgegebenen einen Querschnittsbereich des herzustellenden Formkörpers entsprechenden Bereich durch Aufschmelzen mit der Laserstrahlung daran angebunden. Der jeweilige zu beaufschlagende Bereich ergibt sich für jede Schicht aus vorgegebenen 3D-CAD-Daten. Als Substratmaterial kann Aluminium oder eine dem Pulvermaterial ähnliche Keramik verwendet werden. In an sich aus Rapid-Manufacturing-Verfahren für metallische Werkstoffe bekannter Weise, wird nach Aufschmelzen einer Pulverschicht die Bauplattform abgesenkt und eine neue Pulverschicht aufgetragen. Diese Schritte werden bis zur Fertigstellung des Formkörpers vielfach wiederholt.

Insbesondere wird die jeweilige aufzuschmelzende Pulverschicht mittels eines fokussierten Laserstrahls in einem vorgegebenen, einem Querschnittsbereich des herzustellenden Formkörpers entsprechenden Bereich bestrahlt und dort dadurch auf eine Temperatur oberhalb, vorzugsweise deutlich oberhalb der Schmelztemperatur des Werkstoffes (z.B. deutlich über 2700°C bei einer Mischung Zirkonoxid/Aluminiumoxid) gebracht, so dass beide Komponenten vollständig geschmolzen werden. Der Laserstrahl und der zu bestrahlende Bereich werden relativ zueinander bewegt, vorzugsweise wird der Laserstrahl über den Bereich mit dem zu schmelzenden Pulver bewegt. Dies geschieht, abhängig von der Form und Größe des zu bestrahlenden Bereichs, in der Regel vorzugsweise rasterförmig, d.h. Linie für Linie. Die Geschwindigkeit, mit der der Laser relativ zu dem zu bestrahlenden Bereich verfahren wird, liegt über 10 mm/s, typischerweise zwischen 50 - 600 mm/s. Kurz nachdem der Laserstrahl eine Stelle überfahren, an dieser Stelle die Pulverschicht über ihre gesamte Schichtdicke vollständig aufgeschmolzen und sich aufgrund seiner kontinuierlichen Relativbewegung von dieser Stelle weiterbewegt hat, erstarrt das geschmolzene Material an dieser Stelle wieder.

Generell werden beim SLM-Verfahren beim Aufschmelzen des Pulvers der aktuellen Pulverschicht entlang einer Spur sowohl die darunter liegende Schicht als auch eine oder mehrere benachbarte, schon aufgeschmolzene Spuren der aktuellen Pulverschicht teilweise nochmals mit aufgeschmolzen. Die Scanstrategie wird vorzugsweise hier jedoch so gewählt, dass an einem Punkt, an dem das Aufschmelzen bereits stattgefunden hat, durch die Laserbeaufschlagung einer nachfolgend bearbeiteten Spur erst nach einer Mindestzeitdauer von 50 ms nach dem Aufschmelzen wiederum eine Erwärmung erfolgt. Anders ausgedrückt findet an jedem Punkt auf einer Spur, welcher vom Laserstrahl beaufschlagt wird und an dem dadurch ein Aufschmelzen des Pulvers der aktuellen Pulverschicht bewirkt wird, unmittelbar nach dem Aufschmelzen eine mindestens 50 ms währende Abkühlung statt, in der sich die aktuell aufgeschmolzene Pulverschicht mit der darunter befindlichen Oberfläche des aufzubauenden Formkörpers verbindet. Dadurch wird eine schnelle Erstarrung gewährleistet und das Schmelzbad lateral begrenzt. Vorzugsweise sind die einzelnen Scanlinien (d.h. Spuren) so lang gewählt, dass diese Mindestzeitdauer bereits ohne weitere Vorkehrung eingehalten ist. Häufig können die Scanlinien aufgrund der Komplexität oder geringen Größe des Bauteils jedoch nur kurz gewählt werden. Daher wird, um das Schmelzbad nicht zu groß werden zu lassen und um eine ausreichend schnelle Erstarrung zu erreichen, beim rasterförmigen Überfahren des zu beaufschlagenden Bereichs zwischen Abfahren zweier benachbarter Spuren eine kurze Pause, vorzugsweise mindestens 50 ms, typischerweise ca. 50 bis 200 ms, gemacht.

Eine möglichst große Abkühlgeschwindigkeit, die sich bei einer Scangeschwindigkeit von z.B. > 50 mm/s ergibt, ist vorteilhaft um ein möglichst feinkörniges Gefüge zu erhalten. Bei deutlich geringerer Scangeschwindigkeit stellt sich ein gröberes Gefüge ein, weil die Körner länger Zeit haben zu wachsen.

Nach der Fertigstellung des Formkörpers kann eine Wärmenachbehandlung erfolgen. Dabei wird der Formkörper auf eine Temperatur oberhalb von 1200°C, vorzugsweise oberhalb von 1700°C erhitzt.

Bei der erfindungsgemäß vorgesehenen Vorwärmung werden sowohl die Pulverschicht im aufzuschmelzenden Bereich als auch das Substrat und der im Aufbau befindliche Formkörper vor dem Aufschmelzen auf eine Vorwärmtemperatur aufgeheizt. Die Vorwärmtemperatur ist in jedem Fall hinreichend niedrig, dass dadurch kein Schmelzen des Werkstoffes oder einer seiner Komponenten bewirkt wird.

Für die Werkstoffmischung aus ZrO₂ und Al₂O₃ wird vorzugsweise eine Vorwärmtemperatur von mindestens 1500°C, typischerweise 1500 °C - 1850 °C, vorgesehen.

Bei einem anderen Keramikmaterial, welches einen vergleichsweise geringen Wärmeausdehnungskoeffizienten aufweist, kann die Vorwärmtemperatur auch niedriger ausfallen bzw. weiter von seiner Solidustemperatur entfernt liegen.

Allgemeiner formuliert sollte der Betrag der Vorwärmtemperatur zumindest jedoch so hoch gewählt werden, dass die Differenz zwischen Solidustemperatur und Vorwärmtemperatur nicht größer ist als der Wert der sich aus der Bruchdehnung (d.h. Quotient der Biegefestigkeit und des E-Moduls) geteilt durch den Wärmeausdehnungskoeffizienten des Materials ergibt.

Eine geringere Vorwärmung als oben beschrieben, beispielsweise auf eine Temperatur 1000 K unterhalb der Solidustemperatur des Materials, kann eine Rissbildung im Formkörper in der Regel nicht verhindern und hat in Bezug auf die Werkstoffeigenschaften des hergestellten Formkörpers deutliche Nachteile sowohl gegenüber einer Vorwärmung bei der vorgezogenen Temperatur als auch gegenüber der Variante ohne Vorwärmung.

Die Vorwärmung kann etwa durch Beheizen der Bauplattform, auf der der Formkörper Schicht für Schicht aufgebaut wird, mittels eines elektrischen Heizelementes erfolgen. Möglich ist aber auch die Aufheizung der gesamten Prozesskammer, in der sich die Bauplattform mit dem Substrat und dem aufzubauenden Formkörper befindet, wie bei einem Ofen. Weitere bzw. andere Mittel zur Vorwärmung sind ebenfalls denkbar.

Eine Abkühlung auf Raumtemperatur erfolgt erst nach Auftragen und Aufschmelzen der letzten Schicht des herzustellenden Formkörpers. Es hat Vorteile, wenn der aufzubauende Formkörper zwischen der Bearbeitung zweier Pulverschichten, d.h. nachdem eine Pulverschicht aufgeschmolzen worden ist und bevor eine neue Pulverschicht auf den aufzubauenden Formkörper aufgebracht wird, abgekühlt wird. Dadurch werden Probleme, die durch den Temperaturunterschied zwischen dem neuen Pulver und der zuletzt laserstrahlbearbeiteten Schicht bzw. dem Substrat auftreten, vermieden. Alternativ (oder zusätzlich) kann das neue Pulver ebenfalls vorgewärmt werden, bevor es auf das erhitzte Keramikmaterial aufgetragen wird. Vorzugsweise unterscheidet sich, insbesondere aufgrund einer oder mehrerer dieser Maßnahmen, die Temperatur des für das Aufbringen einer Pulverschicht auf den aufzubauenden Formkörper bereitgestellte Pulver von der Temperatur des aufzubauenden Formkörpers um höchstens 1000 °C, vorzugsweise höchstens um 500 °C, besonders vorgezogen ist ein Temperaturunterschied von höchstens 200°C.

Besondere Vorteile hat es, wenn die beiden keramischen Stoffe im eutektischen Mischungsverhältnis zueinander stehen. Dies gilt insbesondere für eine Werkstoffmischung aus Zirkonoxid (ZrO₂) und Aluminiumoxid (Al₂O₃). Das eutektische Mischungsverhältnis liegt bei dieser Werkstoffmischung bei einem relativen Anteil zueinander von ca. 41.5% ZrO₂ und ca. 58.5% Al₂O₃ (Massenprozent). Bei einem Werkstoffpulver mit diesem Mischungsverhältnis erstarrt das gesamte Material bei einer Temperatur von ca. 1860°C. Bei Verwendung dieses Mischungsverhältnisses entmischen sich die beiden Komponenten noch während des SLM Prozesses und kristallisieren in Form eines besonders homogenen und feinkörnigen Gefüges. Eine Korngröße von unter 500 nm ist auf diese Weise erzielbar. Eine derartig geringe Korngröße ist mit einem einphasigen Keramikwerkstoff nicht erreichbar. Durch diese besonders geringe Korngröße wird eine plastische Verformbarkeit (bei hohen Temperaturen) bzw. Superplastizität erst möglich. Dadurch ist es möglich, dass sich beim erfindungsgemäßen SLM Prozess Eigenspannungen abbauen und dadurch Rissbildung und Verzug vermieden bzw. verringert werden können. Ein Zusatz eines Stoffes, der eine Stabilisierung der tetragonalen Modifikation des ZrO₂, bewirkt, z.B. in konventioneller Weise mit Y₂O₃, ist vorteilhaft, aber nicht zwingend erforderlich.

Gute Ergebnisse können aber auch für zirkonoxidreiche Mischungen aus Zirkonoxid (ZrO₂) und Aluminiumoxid (Al₂O₃) erzielt werden mit einem relativen Anteil von ZrO₂ von 60 bis 90 %, insbesondere bei einem relativen Anteil von 80% ZrO₂ und 20% Al₂O₃. Auch bei dieser Materialmischung können Risse weitgehend vermieden werden. Bei diesem Mischungsverhältnis sollte der ZrO₂-Anteil allerdings in konventioneller Weise mittels z.B. Y₂O₃ stabilisiert bzw. teilstabilisiert werden, um Gefügedefekte nach dem Abkühlen des Formkörpers zu vermeiden. Ein weiterer Aspekt der Erfindung ist ein Formkörper aus keramischem Werkstoff, herstellbar durch zumindest eine Ausführungsform des beschriebenen Verfahrens. Bei diesem Formkörper kann es sich beispielsweise um ein keramisches Gerüst für einen vollkeramischen Zahnersatz handeln.

### Kurze Beschreibung der Zeichnungen

Die vorliegende Erfindung wird nachfolgend anhand von Ausführungsbeispielen in Verbindung mit den Zeichnungen ohne Beschränkung des durch die Patentansprüche vorgegebenen Schutzbereichs nochmals näher erläutert. Hierbei zeigen:
- Fig. 1: Prinzip des schichtweisen Aufbauens beim Selektiven Laserschmelzverfahren
- Fig. 2: Skizze des Schmelzprozesses
- Fig. 3:: Phasendiagramm des Systems Al₂O₃/ZrO₂

### Wege zur Ausführung der Erfindung

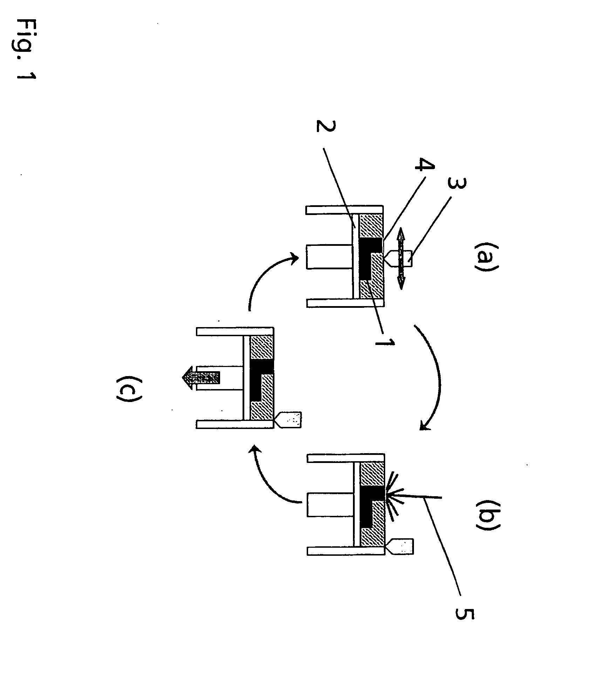

Die Fig. 1 zeigt das Prinzip des schichtweisen Aufbauens beim Selektiven Laserschmelzverfahren. Das Aufbauen erfolgt auf Grundlage von CAD-Daten, welche für jede Schicht des herzustellenden Formkörpers 1 das Verfahren des Laserstrahls 5 genau vorgeben. In Verfahrensschritt (a) erkennt man einen auf einer Bauplattform 2 angeordneten, im Aufbau befindlichen, d.h. "halbfertigen" Formkörper 1. Aus einem Pulvervorrat wird mit einer dafür vorgesehenen Einrichtung Pulver aufgetragen und mit einer Nivelliereinrichtung 3, welche in Pfeilrichtung verfahren wird, so verteilt, dass die Pulverschicht 4 in gewünschter Schichtdicke im gesamten aufzubauenden Bereich vorliegt. Anschließend wird im Verfahrensschritt (b) die aufgebrachte Pulverschicht 4 in einem vorgegebenen, einem Querschnittsbereich des herzustellenden Formkörpers 1 entsprechenden Bereich mittels Laserstrahlung 5 über die gesamte Schichtdicke der Pulverschicht 4 vollständig aufgeschmolzen. Anschließend wird die Bauplattform 2 in Verfahrensschritt (c) um einen, der Dicke einer Schicht 4 entsprechenden Abstand Δz nach unten verfahren. Danach wiederholt sich dieser Vorgang beginnend mit dem Auftragen der nächsten Pulverschicht 4' gemäß Verfahrensschritt (a).

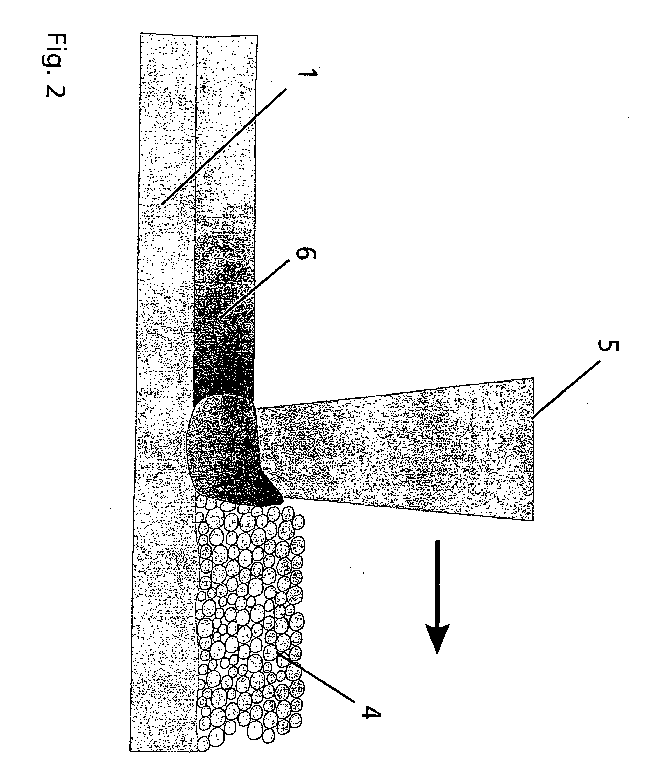

Die Fig. 2 zeigt eine (nicht maßstabsgetreue) Skizze des Schmelzprozesses. Der Laserstrahl 5 wird in Pfeilrichtung über den Formkörper 1 geführt und überführt die Pulverschicht 4 in eine umgeschmolzene Schicht 6. Der Strahldurchmesser des Laserstrahls 5 am Auftreffort auf der Pulverschicht 4 beträgt ca. 200 µm. Die Dicke der Pulverschicht 4 beträgt ca. 50 µm. Sie besteht aus keramischem Werkstoffpulver einer Körnung von ca. 30µm. Die Parameter des Laserstrahls 5 und die Dicke der Pulverschicht 4 sind so gewählt, dass das Werkstoffpulver über die gesamte Schichtdicke der Pulverschicht 4 vollständig aufgeschmolzen wird und darüber hinaus auch die darunter liegende, bereits verfestigte Schicht sowie auch gegebenenfalls eine vorherige daneben liegende Spur teilweise aufgeschmolzen wird. Dadurch wird ein sehr homogener Körper erzeugt, bei dem die einzelnen Schichten im Nachhinein so gut wie nicht mehr erkennbar sind und kein Bindefehler vorliegt.

Als Prozessatmosphäre wird (anders als bei den bekannten Laserschmelzverfahren für Metalle, bei denen als Prozessatmosphäre ein Inertgas eingesetzt wird) im vorliegenden Verfahren Luft verwendet.

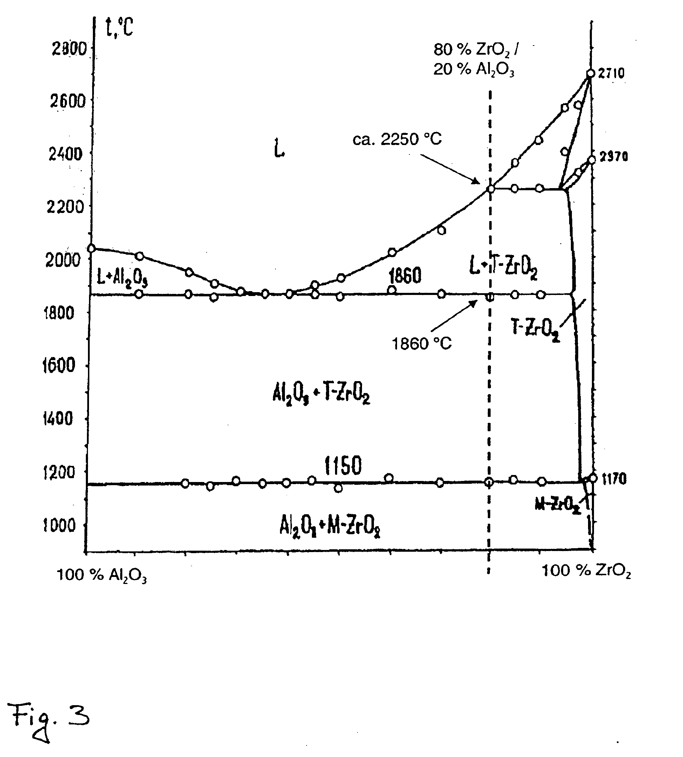

Fig. 3 zeigt das eutektische System Al₂O₃/ZrO₂ (Abbildung modifiziert entnommen aus S. M. Lakiza et al. "Stable and Metastable Phase Relations in the System Alumina-Zirconia-Yttria", Journal of the American Ceramic Society Vol. 80, No. 4, 893-902, 1997). Bei diesem System liegt die Solidustemperatur deutlich unterhalb der Schmelztemperatur der beiden Reinstoffe. Der selektive Laserschmelzprozess wird so geführt, dass nach dem vollständigen Schmelzen einer Pulverschicht des Keramikpulvers bei der Abkühlung zunächst nur eine Phase kristallisiert. In Fig. 3 kann dieser Vorgang für eine beispielhafte Mischung mit einem relativen Anteil von 20% Al₂O₃ und 80% ZrO₂ nachvollzogen werden. Bei einer Temperatur von etwa 2250°C beginnt ZrO₂ aus der Schmelze zu erstarren und - bei entsprechender Prozessführung hinsichtlich der Abkühlgeschwindigkeit - zu kristallisieren. Die eutektische Restschmelze erstarrt bei etwa 1860°C zunächst amorph. Über eine Wärmenachbehandlung kann die amorphe Phase zur Entmischung in die beiden Komponenten und zur Kristallisation gebracht werden.

### Bezugszeichenliste

- 1: Formkörper
- 2: Bauplattform
- 3: Nivelliereinrichtung
- 4: Pulverschicht
- 5: Laserstrahl
- 6: umgeschmolzene Schicht

## Patentansprüche

1. Verfahren zum Herstellen eines Formkörpers (1) aus Keramik durch schichtweises Aufbauen aus pulverförmigem Werkstoff, bei dem jede Pulverschicht (4) in einem vorgegebenen, einem Querschnittsbereich des herzustellenden Formkörpers (1) entsprechenden Bereich vor dem Aufbringen der nächstfolgenden Pulverschicht (4') mittels Laserstrahlung (5) über die gesamte Schichtdicke vollständig aufgeschmolzen wird, wobei der Werkstoff mindestens zwei keramische Stoffe enthält, die ein eutektisches System bilden, **dadurch gekennzeichnet, dass**
eine Vorwärmung einer aufzuschmelzenden Pulverschicht (4) sowie des Substrates und des im Aufbau befindlichen Formkörpers erfolgt, bei der die Pulverschicht (4) sowie das Substrat und der im Aufbau befindliche Formkörper, bevor die Pulverschicht mittels der Laserstrahlung (5) aufgeschmolzen wird, auf eine vorgegebene Vorwärmtemperatur erwärmt wird,
wobei die Vorwärmtemperatur
mindestens 1400° C beträgt und/oder
um höchstens 450 K unterhalb der Solidustemperatur des Werkstoffes liegt.

2. Verfahren nach Anspruch 1, **dadurch gekennzeichnet, dass** die mindestens zwei keramischen Stoffe jeweils mindestens einen relativen Anteil am Werkstoff von 5 Gewichtsprozent, vorzugsweise 10 Gewichtsprozent aufweisen.

3. Verfahren nach einem der Ansprüche 1 bis 2, **dadurch gekennzeichnet, dass** die zwei keramischen Stoffe im eutektischen Mischungsverhältnis zueinander stehen.

4. Verfahren nach einem der Ansprüche 1 bis 2, **dadurch gekennzeichnet, dass** die zwei keramischen Stoffe nicht im eutektischen Mischungsverhältnis zueinander stehen.

5. Verfahren nach einem der Ansprüche 1 bis 4, **dadurch gekennzeichnet, dass** der Werkstoff ZrO₂ und Al₂O₃ enthält.

6. Verfahren nach einem der Ansprüche 4 bis 5, **dadurch gekennzeichnet, dass** die Verfahrensparameter so gewählt sind, dass bei der Abkühlung des geschmolzenen Werkstoffs zunächst nur einer der zwei keramischen Stoffe kristallisiert.

7. Verfahren nach einem der Ansprüche 4 bis 6, **dadurch gekennzeichnet, dass** nach Fertigstellung des Formkörpers eine Wärmenachbehandlung erfolgt, mit der eine Kristallisation eines amorphen Anteils des Werkstoffs bewirkt wird.

8. Verfahren nach einem der Ansprüche 4 bis 7, **dadurch gekennzeichnet, dass** der Anteil von ZrO₂ am Werkstoff über 41,5 Gewichtsprozent und höchstens 90 Gewichtsprozent, vorzugsweise zwischen 60 und 90 Gewichtsprozent beträgt.

9. Verfahren nach einem der Ansprüche 1 bis 8, **dadurch gekennzeichnet, dass** der Werkstoff mindestens einen dritten keramischen Stoff enthält, der bei der Kristallisation aus der Schmelze keine Volumenabnahme, vorzugsweise eine Volumenzunahme, zeigt.

10. Verfahren nach einem der Ansprüche 1 bis 9, **dadurch gekennzeichnet, dass** ein Anteil an Magnesiumoxid von mindestens 5 Gewichtsprozent, vorzugsweise mindestens 10 Gewichtsprozent enthalten ist.

11. Verfahren nach einem der Ansprüche 1 bis 10, **dadurch gekennzeichnet, dass** beim Aufschmelzen der Pulverschicht (4) die Laserstrahlung (5) relativ zu dem herzustellenden Formkörper (1) mit einer Scangeschwindigkeit von mindestens 10 mm/s, vorzugsweise zwischen 50 und 600 mm/s bewegt wird.

12. Verfahren nach einem der Ansprüche 1 bis 11, **dadurch gekennzeichnet, dass** der Werkstoff bindemittelfrei ist.

13. Verfahren nach einem der Ansprüche 1 bis 12, **dadurch gekennzeichnet, dass** als Prozessatmosphäre Raumluft verwendet wird.

14. Formkörper (1) aus keramischem Werkstoff, hergestellt durch ein Verfahren nach einem der vorhergehenden Ansprüche.

## Claims

1. Method for producing a shaped ceramic body (1) by layered construction from powder material, wherein each powder layer (4) is melted completely over the entire layer thickness by means of laser radiation (5) in a specified region, corresponding to one cross-sectional region of the shaped body (1) to be produced, before the subsequent powder layer (4') is applied, the material comprising at least two ceramic substances which form a eutectic system, **characterized in that**
pre-heating of a powder layer (4) to be melted, and also of the substrate and of the shaped body under construction, takes place, wherein the powder layer (4) and also the substrate and the shaped body under construction are heated to a specific pre-heating temperature before the powder layer is melted by means of the laser radiation (5),
the pre-heating temperature
being at least 1400°C and/or
being at most 450 K below the solidus temperature of the material.

2. Method according to Claim 1, **characterized in that** the at least two ceramic substances are present in the material each in at least a relative fraction of 5 weight per cent, preferably 10 weight per cent.

3. Method according to either of Claims 1 and 2, **characterized in that** the two ceramic substances are in the eutectic mixing ratio to one another.

4. Method according to either of Claims 1 and 2, **characterized in that** the two ceramic substances are not in the eutectic mixing ratio to one another.

5. Method according to any of Claims 1 to 4, **characterized in that** the material comprises ZrO₂ and Al₂O₃.

6. Method according to either of Claims 4 and 5, **characterized in that** the method parameters are selected such that when the melted material is cooled, initially only one of the two ceramic substances crystallizes.

7. Method according to any of Claims 4 to 6, **characterized in that** completion of the shaped body is followed by a thermal aftertreatment which brings about crystallization of an amorphous fraction of the material.

8. Method according to any of Claims 4 to 7 **characterized in that** the fraction of ZrO₂ in the material is more than 41.5 weight per cent and at most 90 weight per cent, preferably between 60 and 90 weight per cent.

9. Method according to any of Claims 1 to 8, **characterized in that** the material comprises at least one third ceramic substance which on crystallization from the melt does not exhibit a volume decrease, and preferably exhibits a volume increase.

10. Method according to any of Claims 1 to 9, **characterized in that** a fraction of magnesium oxide of at least 5 weight per cent, preferably at least 10 weight per cent, is included.

11. Method according to any of Claims 1 to 10, **characterized in that** in the melting of the powder layer (4), the laser radiation (5) is moved relative to the shaped body (1) to be produced, at a scanning speed of at least 10 mm/s, preferably between 50 and 600 mm/s.

12. Method according to any of Claims 1 to 11, **characterized in that** the material is binder-free.

13. Method according to any of Claims 1 to 12, **characterized in that** the operating atmosphere used comprises ambient air.

14. Shaped body (1) of ceramic material, produced by a method according to any of the preceding claims.

## Revendications

1. Procédé pour la fabrication d'un corps façonné (1) en céramique par une construction par couches à partir d'un matériau sous forme de poudre, dans lequel chaque couche de poudre (4) est complètement fondue au moyen d'un rayonnement laser (5) sur toute l'épaisseur de couche dans une zone prédéfinie, correspondant à une zone de section transversale du corps façonné (1) à fabriquer avant l'application de la couche de poudre suivante (4'), le matériau contenant au moins deux substances céramiques qui forment un système eutectique, **caractérisé en ce qu'**on réalise un préchauffage d'une couche de poudre (4) à fondre ainsi que du substrat et du corps façonné en construction, lors duquel la couche de poudre (4) ainsi que le substrat et le corps façonné en construction sont chauffés à une température de préchauffage donnée avant que la couche de poudre ne soit fondue au moyen du rayonnement laser (5),
la température de préchauffage
étant d'au moins 1400°C et/ou
se situant à au plus 450 K sous la température de solidus du matériau.

2. Procédé selon la revendication 1, **caractérisé en ce que** lesdites au moins deux substances céramiques présentent chacune au moins une proportion relative de matériau de 5% en poids, de préférence de 10% en poids.

3. Procédé selon l'une quelconque des revendications 1 à 2, **caractérisé en ce que** les deux substances céramiques se trouvent dans un rapport de mélange eutectique l'une par rapport à l'autre.

4. Procédé selon l'une quelconque des revendications 1 à 2, **caractérisé en ce que** les deux substances céramiques ne se trouvent pas dans un rapport de mélange eutectique l'une par rapport à l'autre.

5. Procédé selon l'une quelconque des revendications 1 à 4, **caractérisé en ce que** le matériau contient ZrO₂ et Al₂O₃.

6. Procédé selon l'une quelconque des revendications 4 à 5, **caractérisé en ce que** les paramètres de procédé sont choisis de manière telle que lors du refroidissement du matériau fondu, seule une des deux substances céramiques cristallise d'abord.

7. Procédé selon l'une quelconque des revendications 4 à 6, **caractérisé en ce qu'**après la fabrication du corps façonné, on réalise un post-traitement thermique qui provoque une cristallisation d'une proportion amorphe du matériau.

8. Procédé selon l'une quelconque des revendications 4 à 7, **caractérisé en ce que** la proportion de ZrO₂ par rapport au matériau est supérieur à 41,5% en poids et d'au plus 90% en poids, préférence entre 60 et 90% en poids.

9. Procédé selon l'une quelconque des revendications 1 à 8, **caractérisé en ce que** le matériau contient au moins une troisième substance céramique, qui ne présente pas de diminution de volume et de préférence une augmentation de volume lors de la cristallisation à partir de la masse fondue.

10. Procédé selon l'une quelconque des revendications 1 à 9, **caractérisé en ce qu'**une proportion d'oxyde de magnésium d'au moins 5% en poids, de préférence d'au moins 10% en poids, est contenue.

11. Procédé selon l'une quelconque des revendications 1 à 10, **caractérisé en ce que** lors de la fusion de la couche de poudre (4), le rayonnement laser (5) est déplacé par rapport au corps façonné (1) à fabriquer à une vitesse de balayage d'au moins 10 mm/s, de préférence entre 50 et 600 mm/s.

12. Procédé selon l'une quelconque des revendications 1 à 11, **caractérisé en ce que** le matériau est exempt de liant.

13. Procédé selon l'une quelconque des revendications 1 à 12, **caractérisé en ce que** l'air ambiant est utilisé comme atmosphère de procédé.

14. Corps façonné (1) en matériau céramique, fabriqué par un procédé selon l'une quelconque des revendications précédentes.
